# FASCICULE DE BREVET EUROPEEN

(11) **EP 2 087 698 B1**
(45) Date de publication et mention de la délivrance du brevet: **25.02.2015**
(21) Numéro de dépôt: 07866499.2
(22) Date de dépôt: 26.10.2007
(51) Int. Cl.: H04L 29/06, H04L 29/12

(54) **Procédé d'etablissement d'une connexion securisöe, equipement CFM et produit programme d'ordinateur correspondants**
Verfahren zur Herstellung einer gesicherten Verbindung und entsprechende MFC-Ausrüstung und Computersoftware-Programm
Method for establishing a secured connection, corresponding MFC equipment and computer software program

(30) Priorité: 08.11.2006 FR 0609772
(43) Date de publication de la demande: 12.08.2009
(73) Titulaire: Orange, 75015 Paris (FR)
(72) Inventeur: FODIL, Idir, 22300 Lannion (FR); ALLAIN, Mickael, 22700 Louannec (FR)
(74) Mandataire: Guéné, Patrick
(86) Numéro de dépôt international: PCT/FR2007/052255
(87) Numéro de publication internationale: WO 2008/056071

(56) Documents cités:
- WO-A1-2006/000853
- US-A1- 2003 163 569
- SANJOY SEN PATRICK SOLLEE SEAN MARCH NORTEL NETWORKS: "Midcom-unaware NAT/Firewall Traversal <draft-sen-midcom-fw-nat-01.tx t>" IETF STANDARD-WORKING-DRAFT, INTERNET ENGINEERING TASK FORCE, IETF, CH, no. 1, avril 2002 (2002-04), XP015005209 ISSN: 0000-0004
- ROSENBERG J ET AL: "SIP Traversal through Residential and Enterprise NATs and Firewalls" INTERNET CITATION, [Online] 2 mars 2001 (2001-03-02), XP002245049 Extrait de l'Internet: URL:http://www.watersprings.org/pub/id/dra ft-davies-fw-nat-traversal-00.txt> [extrait le 2003-06-20]

## Description

### 1. Domaine de l'invention

Le domaine de l'invention est celui des communications, notamment de contenus multimédias, sur des réseaux notamment compatibles avec le protocole IP offrant des services multimédias tels que la voix sur IP, la vidéo, etc... aux utilisateurs.

Préférentiellement, l'invention concerne un réseau mettant en oeuvre la procédure HNT (« Hosted NAT Traversal » ou « NAT hôte traversé ») entre un équipement réseau de contrôle de flux multimédias et au moins un terminal utilisateur lorsque le réseau comprend au moins un équipement effectuant de la traduction d'adresse et/ou de port (ou « Network Address Translation » pour "Traduction d'Adresse Réseau"), ci-après désigné par équipement NAT.

En effet, la procédure HNT (ci-après décrite), qui est un mécanisme de traversée d'équipements de traduction d'adresse NAT, est généralement mise en oeuvre lorsqu'un terminal donné connecté en amont d'un équipement NAT (par exemple, une passerelle résidentielle) souhaite envoyer un contenu multimédia à travers cet équipement NAT. Une utilisation de la procédure HNT est décrite dans le document référencé ES 283 003 proposé par l'ETSI ("European Télécommunication Standards Institute") et dans le document référencé XP015005209 (« Midcom-unaware NAT/Firewall Traversal », SANJOY SEN, APRIL 2002). Ce dernier décrit un mécanisme de traversée d'équipements de traduction d'adresses NAT qui ne nécessite pas la mise en oeuvre d'un processus de type ALG (pour « Application Layer Gateways ») embarqué.

### 2. Solutions de l'art antérieur

Dans un réseau multimédia compatible avec le protocole IP, dans le cadre de l'établissement d'une connexion multimédia (lors de laquelle par exemple des contenus multimédias sont échangés) entre un terminal donné et un équipement destinataire, le terminal donné échange tout d'abord des messages de signalisation, par exemple compatibles avec le protocole « Session Initiation Protocol » ci-après référencé par protocole SIP (ou avec tout autre protocole de signalisation), avec un équipement de contrôle de flux de signalisation ci-après désigné par équipement CFS (pour « Contrôle des Flux de Signalisation »). Ces échanges constituent une étape d'établissement de signalisation entre le terminal et l'équipement de contrôle de flux de signalisation.

Ainsi cet équipement CFS est un équipement qui permet l'établissement de signalisation entre un terminal donné et le réseau d'un opérateur. Un équipement CFS embarque par exemple la fonctionnalité P-CSCF (pour « Proxy-Call Session Control Function ») définie dans la nonne 3GPP IMS (pour « Third Generation Partnership Project IP Multimédia Subsystem ») décrite dans le document référencé 3GPP TS 23.228 et la norme ETSI TISPAN (pour « European Telecommunication Standards Institute Telecommunications and Internet converged Services and Protocols for Advanced Networks ») décrite dans le document référencé ETSI ES 282 007. '

Lors du traitement de ces messages de signalisation, l'équipement CFS communique avec un équipement de contrôle de flux multimédias ci-après désigné par équipement CFM (« Contrôle de Flux Multimédia »), pour réserver les ressources nécessaires et autoriser les flux des contenus multimédias entre le terminal donné et l'équipement destinataire.

Ainsi cet équipement CFM est un équipement qui permet le contrôle des flux multimédias des terminaux. Un exemple d'équipement CFM est le C-BGF (pour "Core Border Gateway Function") présenté dans la norme ETSI TISPAN.

Dans le cas où aucun équipement NAT n'est connecté sur le chemin de transmission des contenus multimédias entre le terminal donné et l'équipement CFM ainsi qu'entre le terminal donné et l'équipement CFS, il n'est pas nécessaire de mettre en oeuvre la procédure HNT, car l'équipement CFM a accès aux adresses IP/Ports utilisées par le terminal donné pour la réception de contenus, et le terminal donné a accès aux adresses IP/ports allouées pour l'équipement CFM pour l'émission de contenus.

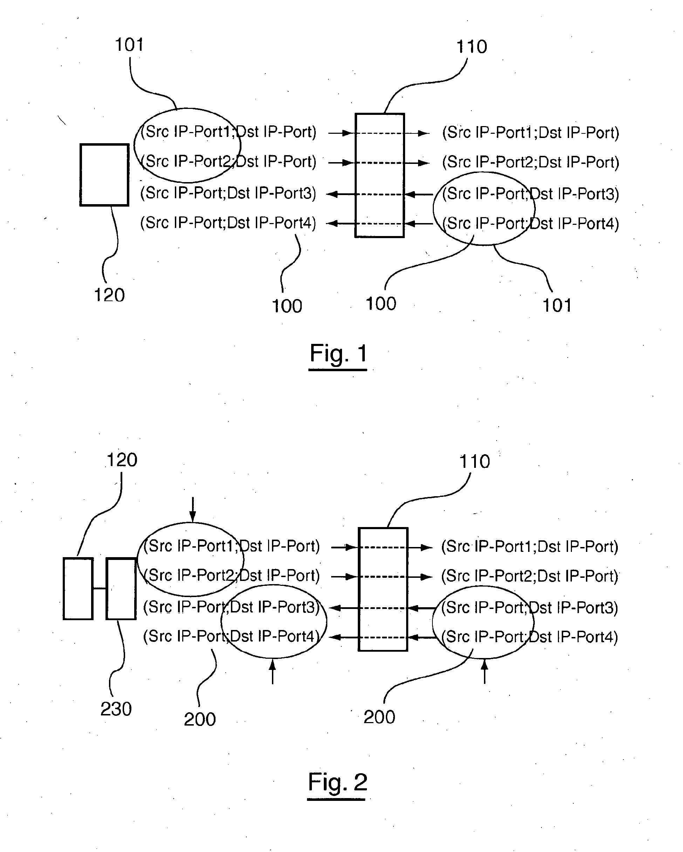

On illustre, en relation avec la *figure 1*, la table de correspondance maintenue 100 d'adresses IP/Ports au niveau de l'équipement CFM 110 pour le terminal donné dans le cas où aucun équipement NAT n'est connecté sur le chemin de transmission des contenus multimédias entre le terminal 120 et l'équipement CFM 110 ainsi qu'entre le terminal 120 et l'équipement CFS, dans le cas de communications compatibles avec les protocoles RTP et RTCP (pour « Real time Transfer Protocol » et « Real time Transfer Control Protocol ») décrit dans le standard RFC 1889.

La table de correspondance 100 comprend les adresses Src IP - Port 1 et Src IP - Port 2 des ports d'émission du terminal 120, les adresses Dst IP - Port des ports de réception de l'équipement destinataire (non représenté), les adresses Src IP - Port des ports d'émission de l'équipement destinataire et les adresse Dst IP - Port 3 et Dst IP - Port 4 des ports de réception du terminal donné.

Lorsque des flux multimédias sont émis ou reçus par le terminal 120, l'équipement CFM 110 remplace les adresses IP/ports marquées comme inconnues 101 sur la figure 1 par les adresses IP/ports utilisées respectivement par le terminal 120 pour l'envoi de flux médias et par l'équipement destinataire pour l'envoi de flux médias vers le terminal 120.

Etant donné que seul le terminal donné 120 connaît l'adresse IP/Port allouée par l'équipement CFM pour l'envoi de flux médias (du fait que cette adresse IP/Port lui a été préalablement transmise par l'équipement CFS), il n'y a pas de risque qu'un autre terminal usurpateur se fasse passer pour le terminal donné qui a initié la connexion.

Par contre, lorsqu'un équipement NAT est connecté entre le terminal donné et l'équipement CFM ainsi qu'entre le terminal donné et l'équipement CFS, il y a un risque qu'un terminal usurpateur se fasse passer pour le terminal donné qui a initié la connexion, pour utiliser sa session et priver le terminal donné d'utiliser la session qu'il a initiée.

On illustre, en relation avec la *figure 2*, la table de correspondance maintenue 200 au niveau de l'équipement CFM 110 lorsqu'un équipement NAT 230 est connecté sur le chemin de transmission des contenus multimédias entre le terminal donné 120 et l'équipement CFM 110 ainsi qu'entre le terminal donné 120 et l'équipement CFS, dans le cas de communications compatibles avec le protocole RTP/RTCP.

Comme l'illustre la figure 2, l'équipement CFM 110 ne connaît pas l'adresse IP/port vers laquelle il doit rediriger les flux envoyés vers le terminal donné 120, et ne connaît pas non plus l'adresse qui sera utilisée par l'équipement NAT 230 pour l'envoi des flux du terminal donné 120.

Afin de résoudre ces problèmes, on utilise la procédure HNT pour permettre à l'équipement CFM 110 d'autoriser les flux médias à transiter depuis ou vers le terminal donné 120.

Ainsi, à l'établissement de la connexion média, l'équipement CFS (qui n'est pas représenté sur la figure 2) détecte que le terminal donné 120 lui est connecté via un équipement NAT 230, car les adresses IP pour les flux médias spécifiées par le terminal donné 120 dans le protocole de signalisation sont différentes de l'adresse IP source du paquet transportant la signalisation et reçu par l'équipement CFS. Ce dernier va alors :
- déclencher la procédure HNT ;
- informer l'équipement CFM que pour cette connexion média requise par le terminal donné, les adresses IP/port du terminal donné sont inconnues ;
- demander à l'équipement CFM d'exécuter la procédure HNT.

L'équipement CFM ayant réservé des adresses IP/ports pour la connexion média, attend que le terminal donné lui envoie un ou plusieurs paquets vides (paquet IP encapsulant des paquets média vides) afin de connaître :
- l'adresse IP/Port allouée par l'équipement NAT pour la transmission des flux média envoyés par le terminal donné;
- l'adresse IP/Port allouée par l'équipement NAT pour la transmission des flux média vers le terminal donné.

L'équipement CFM, grâce aux paquets vides reçus, remplace pour le terminal donné et la connexion donnée, les champs inconnus maintenus dans sa table de correspondance par les informations (adresse IP/port) qu'il connaît maintenant.

L'inconvénient de cette technique de l'art antérieur est le manque de sécurité lié à l'utilisation de la procédure HNT.

En effet, une fois la signalisation établie entre le terminal donné désirant initier une connexion et l'équipement CFS, et la création des tables de correspondances par l'équipement CFM, un terminal usurpateur, autre que le terminal donné qui a initié la connexion, peut se faire passer pour le terminal donné et ainsi utiliser sa connexion. Ceci peut se produire, dans le cas où le terminal usurpateur initie la procédure HNT avant que le terminal donné ne le fasse.

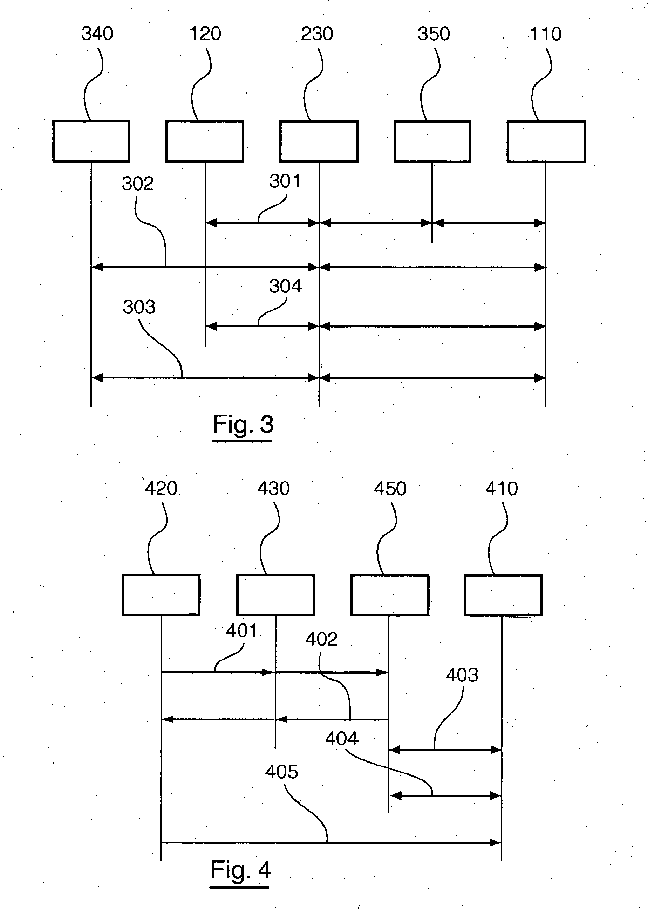

On illustre, en relation avec la *figure 3**,* comment un terminal usurpateur 340 peut se faire passer pour le terminal donné 120 et utiliser la connexion que ce dernier a initiée.

Dans une étape référencée 301, le terminal donné 120 initie une connexion multimédia avec l'équipement CFS 350, puis l'équipement CFS 350 informe l'équipement CFM 110 qu'une connexion est initiée.

Dans une étape référencée 302, le terminal usurpateur 340 démarre la procédure HNT avec l'équipement CFM 110 et utilise ainsi la connexion établie par le terminal donné 120. Puis, dans une étape référencée 303, l'équipement CFM 110 autorise l'établissement des flux entre le terminal usurpateur 340 et l'équipement destinataire, non représenté sur la figure 3.

Ensuite, dans une étape référencée 304, le terminal donné 120 initie à son tour la procédure HNT avec l'équipement CFM 110. L'équipement CFM 110 n'autorise pas l'établissement des flux entre le terminal donné 120 et l'équipement destinataire, car il a déjà transformé les règles illustrées sur la figure 2, en se basant sur les adresses IP/ports fournies par le terminal usurpateur 340.

Ainsi, ce mécanisme s'apparente à du déni de service car il empêche le terminal donné 120 de transmettre et/ou de recevoir un contenu multimédia mais aussi à du vol de service car les flux sont facturés à l'initiateur de la demande, donc au terminal 120.

Il existe donc un besoin d'une technique qui permette de pallier ces inconvénients de l'art antérieur.

Actuellement, aucune technique ne permet de sécuriser la procédure HNT.

Les inventeurs ont observé que, dans certaines situations, il serait souhaitable de pouvoir réserver au terminal donné, qui a initié la connexion multimédia avec l'équipement CFM, l'utilisation de cette connexion afin de transmettre et/ou recevoir des flux multimédias.

C'est notamment le cas lorsqu'un terminal usurpateur autre que le terminal donné tente d'utiliser la connexion établie par le terminal donné avec l'équipement CFM afin de transmettre et/ou recevoir des flux multimédias alors qu'il n'est pas autorisé à le faire.

### 3. Exposé de l'invention

L'invention permet de répondre à ce besoin, en proposant un procédé de transmission d'un flux multimédia selon la revendication 1.

Le principe général de l'invention repose donc sur une sécurisation du mécanisme de traversée d'équipement de traduction d'adresse, grâce à une vérification que le terminal requérant et le terminal ayant établi la signalisation sont identiques.

Ainsi, l'invention permet de réserver, au terminal qui a établi une signalisation avec un équipement de contrôle de flux multimédia pour la transmission d'un flux à travers un équipement de traduction d'adresse, l'utilisation de cette signalisation afin de transmettre et/ou recevoir le flux multimédia.

Ainsi, l'invention permet de s'assurer qu'un terminal usurpateur ne peut pas bénéficier d'un établissement de signalisation préalablement mis en oeuvre par un autre terminal.

Selon l'invention, ladite étape de vérification comprend une étape de combinaison d'une première information d'autorisation provenant du terminal requérant et d'une seconde information d'autorisation provenant de l'équipement de contrôle de flux de signalisation et une étape d'autorisation de ladite transmission après vérification que les première et seconde informations sont appariées.

Par exemple, les première et seconde informations d'autorisation sont appariées si elles sont identiques. Si les première et seconde informations d'autorisation ne sont pas appariées, la transmission de flux multimédia depuis ou vers le terminal requérant n'est pas autorisée.

Selon une caractéristique de l'invention, la première, respectivement la seconde, information d'autorisation est préalablement transmise au terminal, respectivement à l'équipement de contrôle de flux multimédias, par l'équipement de contrôle de flux de signalisation.

Ainsi, c'est l'équipement de contrôle de flux de signalisation qui génère les informations d'autorisation lors de la phase d'initialisation de la session lancée par le terminal et les transmet d'une part au terminal, et d'autre part à l'équipement de contrôle de flux multimédia. Il peut ainsi générer deux informations d'autorisation identiques, ou déductibles l'une de l'autre par transformation mathématique par exemple.

Selon une caractéristique de l'invention, la seconde information d'autorisation est comprise dans au moins un champ d'une demande de réservation de ressource pour la transmission du flux.

Ainsi, l'invention n'impose pas d'ajouter au procédé de transmission du flux multimédia la mise en oeuvre d'un message dédié à la transmission de la seconde information d'autorisation.

Au contraire, le message dédié à la réservation de ressource, transmis par l'équipement de contrôle de flux de signalisation à l'équipement de contrôle de flux multimédia, est également utilisé pour effectuer cette transmission de la seconde information.

Selon une variante conforme à la présente invention, la seconde information d'autorisation est encapsulée dans un message de réservation de ressource.

Selon une caractéristique de la présente invention, la transmission de la seconde information d'autorisation est effectuée au moyen d'une interface directe entre l'équipement de contrôle de flux de signalisation et l'équipement de contrôle de flux multimédias.

Selon une caractéristique de l'invention, la première information d'autorisation est comprise dans au moins un champ d'un message de confirmation de l'acceptation de l'établissement d'une connexion entre l'équipement de contrôle de flux de signalisation et le terminal requérant.

Ainsi, l'invention n'impose pas d'ajouter au procédé de transmission du flux multimédia la mise en oeuvre d'un message dédié à la transmission de la première information d'autorisation.

Selon une variante conforme à la présente invention, la première information d'autorisation est encapsulée dans un message de signalisation.

Selon une caractéristique de l'invention, les première et seconde informations d'autorisation sont uniques pour chaque flux transmis depuis ou vers le terminal.

Ceci permet d'augmenter la sécurisation du mécanisme de traversée d'équipement de traduction d'adresse, en sécurisant indépendamment chacun des flux.

Selon une caractéristique de l'invention, ladite étape de combinaison des première et seconde informations d'autorisation est mise en oeuvre par l'équipement de contrôle de flux multimédias après qu'il a reçu lesdites première et seconde informations d'autorisation.

Notamment, la première information d'autorisation est transmise par le terminal à l'équipement de contrôle de flux multimédia lorsque ce terminal souhaite initier l'étape de mise en oeuvre du mécanisme HNT de traversée d'un équipement de traduction d'adresse réseau.

Selon une caractéristique de l'invention, si les première et seconde informations ne sont pas appariées, l'équipement de contrôle de flux multimédias peut alors envoyer un message à l'équipement de contrôle de flux de signalisation lui indiquant qu'une tentative frauduleuse de connexion a été mise en oeuvre par le terminal requérant.

Par exemple, le mécanisme de traversée d'un équipement de traduction d'adresse est la procédure HNT qui permet de mettre à jour une liste d'au moins une adresse de l'équipement de contrôle de flux multimédias, et ladite mise à jour n'est effectuée que si les première et seconde informations d'autorisation sont appariées.

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de transmission tel que précédemment décrit.

Les avantages du produit programme d'ordinateur sont similaires à ceux du procédé de transmission tel que précédemment décrit, ils ne sont pas détaillés plus amplement.

### 4. Liste des figures

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- la figure 1, déjà commentée en relation avec l'art antérieur, illustre une table de correspondance maintenue d'adresses IP/Ports au niveau d'un équipement CFM dans le cas où aucun équipement NAT n'est connecté sur le chemin de transmission des contenus multimédias entre un terminal donné et l'équipement CFM ;
- la figure 2, déjà commentée en relation avec l'art antérieur, illustre la table de correspondance maintenue au niveau de l'équipement CFM lorsqu'un équipement NAT est connecté sur le chemin de transmission des contenus multimédias entre le terminal donné et l'équipement CFM ;
- la figure 3, déjà commentée en relation avec l'art antérieur, illustre comment un terminal usurpateur peut se faire passer pour le terminal donné et utiliser la connexion que ce dernier a initiée ;
- les figures 4 et 5 illustrent un mode de réalisation particulier du procédé d'établissement d'une connexion principale selon l'invention ;
- la figure 6 illustre la structure simplifiée d'un équipement CFS selon le mode de réalisation particulier de l'invention ;
- la figure 7 illustre la structure simplifiée d'un équipement CFM selon le mode de réalisation particulier de l'invention ;
- la figure 8 illustre la structure simplifiée d'un terminal donné selon le mode de réalisation particulier de l'invention.

### 5. Description d'un mode de réalisation de l'invention

Le principe général de l'invention repose sur l'authentification de paquets de données envoyés par un terminal à un équipement de contrôle de flux multimédias, encore appelé CFM, dans le cadre de la mise en oeuvre d'une procédure de type HNT. Cette authentification repose sur la comparaison d'une première information d'autorisation, encore appelée "token", transmise par le terminal à l'équipement CFM, et d'une seconde information d'autorisation, transmise à l'équipement CFM par un équipement de contrôle de flux de signalisation, encore appelé CFS, auprès duquel le terminal a initié sa session.

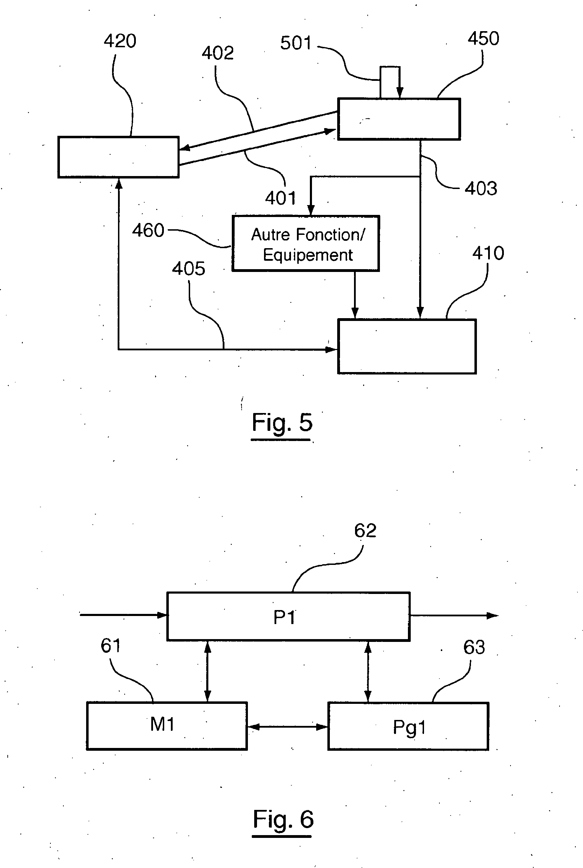

On se place dans le cadre d'un mode de réalisation particulier du procédé de transmission d'un flux multimédia selon l'invention, illustré par les *figures 4* *et* *5*.

Selon ce mode de réalisation particulier, un terminal donné 420 d'un réseau de communication multimédia compatible avec le protocole IP, souhaite établir une connexion multimédia principale avec un équipement destinataire (non représenté) afin d'échanger au moins un flux multimédia de données c0 (non représenté). Le terminal donné 420 et l'équipement destinataire sont reliés via un équipement de contrôle de flux de signalisation 450 (ou équipement CFS) conforme à un protocole de signalisation (qui est par exemple le protocole SIP) et un équipement de contrôle de flux multimédia 410 (ou équipement CFM).

Un équipement NAT 430, par exemple une passerelle résidentielle ou domestique, est connecté entre le terminal donné 420 et l'équipement CFS 450.

Dans une étape référencée 401 d'établissement de signalisation entre le terminal donné 420 et l'équipement CFS 450, le terminal donné 420 envoie à l'équipement CFS 450 une demande d'initiation (par exemple sous forme d'un message compatible avec le protocole SIP) d'une connexion secondaire entre l'équipement CFS et le terminal donné. Puis, l'équipement CFS 450 reçoit cette demande en provenance du terminal donné 420.

Si l'équipement CFS 450 accepte de mettre en oeuvre l'établissement de la connexion secondaire, alors les étapes suivantes sont mises en oeuvre.

Dans une étape 501, l'équipement CFS 450 génère un jeton (ou information d'autorisation) qui est par exemple une chaîne de caractères. Le jeton généré par l'équipement CFS est unique pour chaque flux multimédia.

Puis, dans une étape 402, l'équipement CFS 450 envoie, au terminal donné 420, un message de confirmation de l'acceptation de l'établissement de la connexion secondaire (par exemple sous forme d'un message compatible avec le protocole SIP).

L'équipement CFS 450 transmet également le jeton au terminal donné 420.

Pour ce faire, préférentiellement, le jeton est inclus dans au moins un champ du message de confirmation de l'acceptation de l'établissement de la connexion secondaire.

Cependant, le jeton peut également être encapsulé dans un autre message de signalisation (par exemple conforme au protocole de signalisation SIP).

Puis, dans une étape 403, l'équipement CFS 450 :
- envoie, à l'équipement CFM 410, une demande de réservation de ressources conforme à un protocole de réservation de ressources pour l'échange du flux c0 ; et
- transmet le jeton à l'équipement CFM 410.

Pour ce faire, préférentiellement, le jeton est inclus dans au moins un champ de la demande de réservation de ressource.

Cependant, le jeton peut également être encapsulé dans un autre message - de réservation de ressource (par exemple conforme au protocole de réservation de ressource).

Par ailleurs, pour effectuer cette transmission du jeton et/ou l'envoi de la demande de réservation de ressources, l'équipement CFS 450 utilise une interface directe entre l'équipement CFS 450 et l'équipement CFM 410.

Cependant il peut également utiliser toute autre fonctionnalité réseau se trouvant dans l'équipement CFS ou même dans un autre équipement 460.

Ensuite, dans une étape 405, un terminal requérant initie la procédure HNT entre le terminal donné et l'équipement CFM 410 afin de traverser l'équipement NAT 430 (non représenté sur la figure 5), Pour ce faire, le terminal requérant envoie un premier paquet de données média, ci-après appelé paquet dédié, (par exemple un paquet conforme au protocole RTP) à l'équipement CFM 410. Avant de transmettre le paquet dédié, le terminal requérant a préalablement inclus dans un champ de ce paquet dédié un premier jeton.

A la réception du paquet dédié, l'équipement CFM 410 vérifie que le terminal requérant, qui souhaite utiliser le mécanisme HNT avec l'équipement de contrôle de flux multimédia 410 pour la transmission du flux c0, est bien le terminal donné qui a été impliqué dans l'exécution des étapes référencées 401, 402 avec l'équipement CFS 450.

Pour ce faire, par exemple, il vérifie si le premier jeton contenu dans le paquet dédié (et donc transmis par le terminal requérant) est identique au jeton qu'il a préalablement reçu de l'équipement CFS 450 (dans l'étape 403), ci-après appelé second jeton. Pour effectuer une telle vérification, il peut combiner les premier et second jetons par toute technique classique.

Selon un mode de réalisation particulier, si les premier et second jetons sont identiques, alors cela signifie que le terminal requérant est le terminal donné 420 et alors, l'équipement CFM 410 met à jour sa table NAT (qui est une liste d'adresses IP/Ports) avec les adresses IP/Ports du terminal donné 420 et autorise la mise en oeuvre du flux (correspondant au flux c0 entre l'équipement destinataire et le terminal donné 420.

Si les premier et second jetons sont distincts, alors cela signifie que le terminal requérant n'est pas le terminal donné (par exemple le terminal requérant est un terminal usurpateur qui tente d'accéder au flux c0 de manière illégale) et alors, l'équipement CFM 410 n'autorise pas la mise en oeuvre du flux correspondant au flux c0 entre l'équipement destinataire et le terminal usurpateur. Par ailleurs, l'équipement CFM 410 signale à l'équipement CFS 450 qu'il y a une tentative d'usurpation par un terminal usurpateur.

Dans le cas où l'équipement CFS 450 est ainsi informé d'une tentative d'usurpation, il peut par exemple, rejeter la demande du terminal usurpateur ou même effectuer tout autre traitement, par exemple inscrire le terminal usurpateur sur une liste noire comprenant des dispositifs bannis.

Selon une variante de ce mode de réalisation particulier, l'équipement CFS 450 génère (au terme de l'étape 401) deux jetons distincts, un jeton A et un jeton B, qu'il transmet ensuite respectivement au terminal donné (par exemple dans l'étape 402) et à l'équipement CFM (dans l'étape 403). Les deux jetons A et B sont appariés, par exemple parce qu'ils présentent un structure similaire, ou sont déductibles l'un de l'autre par transformation mathématique ou translation d'une chaîne de caractères.

Ainsi selon cette variante, à la réception du paquet dédié, l'équipement CFM 410 vérifie si les premier (correspondant au jeton A) et second (correspondant au jeton B) jetons sont appariés en combinant ces premier et second jetons, de façon à n'autoriser l'échange du flux c0 qu'après vérification que les premier et second jetons sont appariés.

Selon cette variante, si le paquet dédié provient d'un terminal usurpateur, alors les premier (ne correspondant pas au jeton A) et second (correspondant au jeton B) jetons ne sont pas appariés et l'équipement CFM 410 n'autorise pas la mise en oeuvre du flux correspondant au flux c0 entre l'équipement destinataire et le terminal usurpateur.

On présente, en relation avec la *fïgure 6*, la structure simplifiée d'un équipement CFS selon le mode de réalisation particulier décrit ci-dessus.

Comme illustré en figure 6, un tel équipement CFS comprend une mémoire 61, une unité de traitement 62, équipée par exemple d'un microprocesseur µP1, et pilotée par le programme d'ordinateur 63, mettant en oeuvre le procédé de transmission selon l'invention.

A l'initialisation, les instructions de code du programme d'ordinateur 63 sont par exemple chargées dans une mémoire RAM avant d'être exécutées par le processeur de l'unité de traitement 62.

Le microprocesseur de l'unité de traitement 62 met en oeuvre les étapes du procédé de transmission décrit précédemment de façon à transmettre au moins un flux multimédia.

Pour cela, l'équipement CFS comprend des moyens d'établissement de signalisation avec un terminal dans le cadre de la transmission d'un flux multimédia depuis ou vers le terminal.

Il comprend également :
- des moyens de transmission d'une première information d'autorisation au terminal ;
- des moyens de transmission d'une seconde information d'autorisation à un équipement de contrôle de flux de données,
la première information d'autorisation étant destinée à être combinée avec la seconde information d'autorisation, de façon à n'autoriser ladite transmission du flux multimédia qu'après vérification que les première et seconde informations sont appariées.

Ces moyens sont pilotés par le microprocesseur de l'unité de traitement 62.

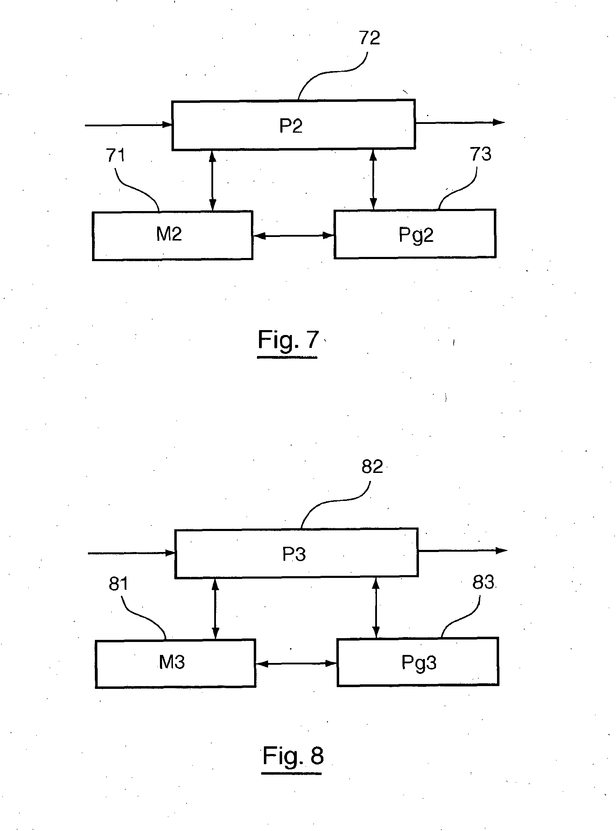

On présente, en relation avec la *figure 7*, la structure simplifiée d'un équipement CFM selon le mode de réalisation particulier décrit ci-dessus.

Comme illustré en figure 7, un tel équipement CFS comprend une mémoire 71, une unité de traitement 72, équipée par exemple d'un microprocesseur µP2, et pilotée par le programme d'ordinateur 73, mettant en oeuvre le procédé de transmission selon l'invention.

A l'initialisation, les instructions de code du programme d'ordinateur 73 sont par exemple chargées dans une mémoire RAM avant d'être exécutées par le processeur de l'unité de traitement 72.

Le microprocesseur de l'unité de traitement 72 met en oeuvre les étapes du procédé de transmission décrit précédemment de façon à transmettre au moins un flux multimédia.

Pour cela, l'équipement CFM comprend des moyens de mise en oeuvre, avec un terminal, d'un mécanisme (HNT) de traversée d'un équipement de traduction d'adresse (NAT) dans le cadre de la transmission d'un flux multimédia donné depuis ou vers le terminal.

Il comprend en outre des moyens de vérification que ledit terminal requérant l'activation desdits moyens de mise en oeuvre est le même qu'un second terminal impliqué dans l'activation de moyens d'établissement de signalisation entre le second terminal et un équipement de contrôle de flux de signalisation (CFS).

Ces moyens sont pilotés par le microprocesseur de l'unité de traitement 72.

On présente, en relation avec la *figure 8*, la structure simplifiée d'un terminal selon le mode de réalisation particulier décrit ci-dessus.

Comme illustré en figure 8, un tel terminal comprend une mémoire 81, une unité de traitement 82, équipée par exemple d'un microprocesseur µP3, et pilotée par le programme d'ordinateur 83, mettant en oeuvre le procédé de transmission selon l'invention.

A l'initialisation, les instructions de code du programme d'ordinateur 83 sont par exemple chargées dans une mémoire RAM avant d'être exécutées par le processeur de l'unité de traitement 82.

Le microprocesseur de l'unité de traitement 82 met en oeuvre les étapes du procédé de transmission décrit précédemment de façon à transmettre au moins un flux multimédia.

Pour cela, le terminal comprend :
- des moyens d'établissement de signalisation avec un équipement de contrôle de flux de signalisation (CFS) dans le cadre de la transmission du flux multimédia depuis ou vers le terminal ;
- des moyens de mise en oeuvre entre le terminal et un équipement de contrôle de flux multimédias (CFM), d'un mécanisme (HNT) de traversée d'un équipement de traduction d'adresse (NAT).

Il comprend en outre des moyens de réception d'une première information d'autorisation destinée à être combinée avec une seconde information d'autorisation provenant de l'équipement de contrôle des flux de signalisation, de façon à n'autoriser ladite transmission du flux multimédia qu'après vérification que les première et seconde informations d'autorisation sont appariées.

Ces moyens sont pilotés par le microprocesseur de l'unité de traitement 82.

## Revendications

1. Procédé de transmission d'un flux multimédia depuis ou vers un terminal (420), comprenant :
- une étape d'établissement de signalisation entre le terminal et un équipement de contrôle de flux de signalisation (450) ; et
- une étape de mise en oeuvre, entre le terminal et un équipement de contrôle de flux multimédias (410), d'un mécanisme de traversée d'un équipement de traduction d'adresse (430),
**caractérisé en ce qu'**il comprend en outre une étape de vérification que le terminal requérant l'exécution de ladite étape de mise en oeuvre est le même que ledit terminal impliqué dans l'exécution de ladite étape d'établissement de signalisation,
ladite étape de vérification étant mise en oeuvre par l'équipement de contrôle de flux multimédias et comprenant :
- une étape de combinaison d'une première information d'autorisation provenant du terminal requérant et d'une seconde information d'autorisation provenant de l'équipement de contrôle de flux de signalisation (450), la première information d'autorisation ayant été préalablement transmise au terminal par l'équipement de contrôle de flux de signalisation ; et
- une étape d'autorisation de ladite transmission du flux multimédia après vérification que les première et seconde informations sont appariées.

2. Procédé de transmission selon la revendication 1, **caractérisé en ce que** la seconde information d'autorisation est comprise dans au moins un champ d'une demande de réservation de ressource pour la transmission du flux.

3. Procédé de transmission selon la revendication 1, **caractérisé en ce que** la première information d'autorisation est comprise dans au moins un champ d'un message de confirmation de l'acceptation de l'établissement d'une connexion entre l'équipement de contrôle de flux de signalisation (450) et le terminal requérant.

4. Procédé de transmission selon l'une quelconque des revendications 1 à 3, **caractérisé en ce que** les première et seconde informations d'autorisation sont uniques pour chaque flux transmis depuis ou vers le terminal (420).

5. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon l'une au moins des revendications 1 à 4.

## Patentansprüche

1. Verfahren zur Übertragung eines Multimediastroms von oder zu einem Endgerät (420), das Folgendes aufweist:
- einen Schritt zur Herstellung von Signalisierung zwischen dem Endgerät und einer Signalisierungsströme-Steuerausrüstung (450); und
- einen Schritt zum Ausführen eines Mechanismus für den Durchgang durch eine Adressübersetzungsausrüstung (430) zwischen dem Endgerät und einer Multimediaströme-Steuerausrüstung (410),
**dadurch gekennzeichnet, dass** es ferner einen Schritt zum Überprüfen, dass das Endgerät, das die Ausführung des Ausführungsschritts anfordert, dasselbe ist wie das Endgerät, das an der Ausführung des Schritts zur Herstellung von Signalisierung beteiligt ist,
wobei der Überprüfungsschritt durch die Multimediaströme-Steuerausrüstung ausgeführt wird und Folgendes aufweist:
- einen Schritt zum Kombinieren einer ersten Genehmigungsinformation, die von dem anfordernden Endgerät stammt, und einer zweiten Genehmigungsinformation, die von der Signalisierungsströme-Steuerausrüstung (450) stammt, wobei die erste Genehmigungsinformation im Voraus durch die Signalisierungsströme-Steuerausrüstung an das Endgerät übertragen wurde; und
- einen Schritt zur Genehmigung der Übertragung des Multimediastroms nach Überprüfung, dass die erste und die zweite Information zusammenpassen.

2. Übertragungsverfahren nach Anspruch 1, **dadurch gekennzeichnet, dass** die zweite Genehmigungsinformation in mindestens einem Feld einer Anforderung zur Reservierung von Ressourcen für die Übertragung des Stroms enthalten ist.

3. Übertragungsverfahren nach Anspruch 1, **dadurch gekennzeichnet, dass** die erste Genehmigungsinformation in mindestens einem Feld einer Nachricht zur Bestätigung der Annahme der Herstellung einer Verbindung zwischen der Signalisierungsströme-Steuerausrüstung (450) und dem anfordernden Endgerät enthalten ist.

4. Übertragungsverfahren nach einem der Ansprüche 1 bis 3, **dadurch gekennzeichnet, dass** die erste und die zweite Genehmigungsinformation für jeden von oder zu dem Endgerät (420) übertragenen Strom eindeutig sind.

5. Computersoftware-Programm, das von einem Kommunikationsnetz heruntergeladen und/oder auf einem maschinenlesbaren Träger gespeichert und/oder durch einen Prozessor ausgeführt werden kann, **dadurch gekennzeichnet, dass** es Programmcodebefehle für das Ausführen des Übertragungsverfahrens nach mindestens einem der Ansprüche 1 bis 4 aufweist.

## Claims

1. Method of transmission of a multimedia stream from or to a terminal (420), comprising:
- a step of establishment of signalling between the terminal and a signalling streams control device (450); and
- a step of implementation, between the terminal and a multimedia streams control device (410), of a mechanism of traversal of an address translation device (430),
**characterized in that** it furthermore comprises a step of verification that the terminal requesting the execution of said implementation step is the same as said terminal involved in the execution of said step of establishment of signalling,
said verification step being implemented by the multimedia streams control device and comprising:
- a step of combining a first authorization information item originating from the requesting terminal and a second authorization information item originating from the signalling streams control device (450), the first authorization information item having been previously transmitted to the terminal by the signalling streams control device; and
- a step of authorizing said transmission of the multimedia stream after verification that the first and second information items are paired.

2. Method of transmission according to Claim 1, **characterized in that** the second authorization information item is included in at least one field of a resource reservation request for the transmission of the stream.

3. Method of transmission according to Claim 1, **characterized in that** the first authorization information item is included in at least one field of a message for confirming the acceptance of the establishment of a connection between the signalling streams control device (450) and the requesting terminal.

4. Method of transmission according to any one of Claims 1 to 3, **characterized in that** the first and second authorization information items are unique for each stream transmitted from or to the terminal (420).

5. Computer program product downloadable from a communication network and/or recorded on a medium readable by computer and/or executable by a processor, **characterized in that** it comprises program code instructions for the implementation of the method of transmission according to at least one of Claims 1 to 4.
